# EUROPÄISCHE PATENTSCHRIFT

(11) **EP 2 233 249 B1**
(45) Veröffentlichungstag und Bekanntmachung des Hinweises auf die Patenterteilung: **22.08.2012**
(21) Anmeldenummer: 10157609.8
(22) Anmeldetag: 24.03.2010
(51) Int. Cl.: B25B 23/145, B23P 19/06

(54) **System zum gleichzeitigen Anziehen von mehreren Verschraubungen in einem Arbeitsgang**
System for simultaneous tightening of multiple threaded joints in one processing step
Système pour serrer simultanément plusieurs boulonnages en une étape

(30) Priorität: 25.03.2009 DE 102009014230
(43) Veröffentlichungstag der Anmeldung: 29.09.2010
(73) Patentinhaber: HydroWer-Hydraulik Gmbh, 45549 Sprockhövel (DE)
(72) Erfinder: Werner, Karl-Heinz, 45549, Sprockhövel (DE)
(74) Vertreter: Kalkoff & Partner

(56) Entgegenhaltungen:
- EP-A2- 1 151 826
- FR-A1- 2 285 652
- FR-A1- 2 339 469

## Beschreibung

Die Erfindung betrifft ein System zum gleichzeitigen Anziehen von mehreren Verschraubungen in einem Arbeitsgang, mit einer eine Ventileinheit aufweisenden Antriebseinheit für mindestens zwei, vorzugsweise vier hydraulische Kraftschrauber mit jeweils einer Kolben-Zylinder-Einheit, die jeweils über eine auf einer Lasthubseite und eine auf einer Rückhubseite angeordnete Hydraulikleitung mit der Ventileinheit verbunden sind, wobei an der Antriebseinheit
- eine erste Messvorrichtung zur Erfassung des Volumens und/oder Volumenstroms auf der Rückhubseite und/oder Lasthubseite der mit der Antriebseinheit verbundenen Kraftschrauber und/oder
- eine zweite Messvorrichtung zur Ermittlung des Volumens und/oder Volumenstroms durch ein den Drehmomentdruck begrenzendes Druckdrehmomentventil angeordnet ist.

Vorrichtungen zur Steuerung hydraulisch betriebener Kraftschrauber sind aus dem Stand der Technik in vielfältigen Ausführungen bekannt. So beschreibt die DE 10 2004 058 338 A1 eine Vorrichtung zur automatisierten Herstellung einzelner Verschraubungen, wobei jeweils ein Kraftschrauber über eine Antriebseinheit angetrieben wird und eine Auswertelektronik anzeigt, wenn die mit dem Kraftschrauber herzustellende Verschraubung das geforderte Anzugsmoment aufweist. Der eigentliche Schraubvorgang setzt sich dabei aus mehreren Arbeitsvorgängen zusammen, bei denen eine den Kraftschrauber antreibende Kolben-Zylinder-Einheit jeweils einen Last- und eine Rückhub ausübt. Die Kolben-Zylinder-Einheit dient dabei bei bekannten Kraftschraubern bspw. zum Antrieb eines Ratschenrades, welches durch die Kolben-Zylinder-Einheit verdreht wird. Der Volumenstrom sorgt hierbei für die Bewegung der Kolben-Zylinder-Einheit und der Druck für die Kraft, welche auf das Ratschenrad zur Herstellung einer Schraubverbindung übertragen wird.

Eine Vorrichtung gemäß dem Oberbegriff von Anspruch 1 ist in der EP 1 151 826 A2 gezeigt.

Ein an einem Druckdrehmomentventil der Antriebseinheit eingestellter Druck legt somit das Drehmoment fest, mit dem die Verschraubung hergestellt wird. Der Schraubvorgang zur Herstellung der Verschraubung wird solange mit Lasthüben mit ansteigendem Druck durchgeführt, bis der am Druckdrehmomentventil eingestellte Druck erreicht ist und sich die anzuziehende Schraube bei dem Drehmomentdruck nicht mehr dreht, was bedeutet, dass die Schraube angezogen bzw. nachgezogen ist oder/und sich gesetzt hat.

Bekannte Automatisierungen haben mittlerweile dafür gesorgt, dass es nicht mehr in die Verantwortlichkeit des Bedienpersonals fällt, zu entscheiden, ob der Schraubvorgang einwandfrei durchgeführt wurde. Hierdurch konnten bereits erhebliche Personalkosten eingespart sowie die Zuverlässigkeit der hergestellten Verschraubungen in erheblichem Maße gesteigert werden. Die bekannten Systeme weisen jedoch den Nachteil auf, dass auch die dabei verwendeten Überwachungseinrichtungen nicht in zuverlässiger Weise gewährleisten, dass alle bei einem gleichzeitigen Anziehen herzustellende Verschraubungen bis auf einen festgelegten Drehmomentdruck und/oder Drehwinkel angezogen werden bzw. nachgezogen sind und/oder sich gesetzt haben, wie dies vor allem bei langen Schrauben wichtig ist. Insbesondere bei Großbauten ist es aus konstruktiven Bedingungen erforderlich, zwei oder mehrere einander gegenüberliegende Verschraubungen in einem Arbeitsgang und gleichzeitig anzuziehen. Vom Bediener muss dazu jede einzelne Verschraubung beobachtet werden, um festzustellen, ob alle angezogen sind oder nicht. Da die einzelnen Verschraubungspunkte oftmals räumlich weit voneinander entfernt angeordnet sind, so dass zwischen diesen kein Sichtkontakt für das Bedienpersonal zur zeitlichen Abstimmung der Arbeiten hergestellt werden kann, besteht der Bedarf an einem System, das in zuverlässiger Weise ein gleichzeitiges Anziehen aller in einem Arbeitsgang herzustellenden Verschraubungen bis auf ein zuvor eingestellten Drehmomentdruck und/oder Drehwinkel gewährleistet.

Die Verwendung einzelner mit jeweils einer Antriebseinheit verbundener Kraftschrauber zur gleichzeitigen Herstellung mehrer Verschraubungen macht die abgestimmte Verwendung mehrerer derartiger Vorrichtungen erforderlich, wozu sich die einzelnen Bediener untereinander abstimmen müssten. Diese Abstimmung wird dabei durch den Umstand erschwert, dass die Verschraubungspunkte derart weit voneinander entfernt angeordnet sind, dass sie nicht von den anderen Verschraubungspunkten eingesehen werden können.

Der Erfindung liegt die Aufgabe zugrunde, ein System bereitzustellen, das ein gleichzeitiges Anziehen von mehreren Verschraubungen in einem Arbeitsgang ermöglicht. Die Erfindung löst die Aufgabe durch ein System mit den Merkmalen des Anspruchs 1. Vorteilhafte Weiterbildungen des Systems sind in den abhängigen Ansprüchen angegeben.

Das erfindungsgemäße System zeichnet sich insbesondere dadurch aus, dass lediglich eine Antriebseinheit zum Betrieb einer Mehrzahl an diese Antriebseinheit anschließbarer Kraftschrauber genutzt werden kann. Die Kraftschrauber sind dabei jeweils über separate, zu einer Lasthubseite und zu einer Rückhubseite einer Kolben-Zylinder-Einheit der jeweiligen Kraftschrauber führende Hydraulikleitungen mit der Ventileinheit der Antriebseinheit verbunden. Somit besteht die Möglichkeit einer zentralen Steuerung sämtlicher an die Antriebseinheit angeschlossener Kraftschrauber. Eine erste und/oder zweite an der Antriebseinheit angeordnete Messvorrichtung dient zur Erfassung der Volumenströme und/oder Volumenmenge in dem System, wobei die erste Messvorrichtung zur Erfassung des Volumenstroms und/oder der Volumenmenge in einer oder beiden Hydraulikleitungen jedes an der Antriebseinheit angeschlossenen Kraftschraubers dient und die zweite Messvorrichtung den über das Druckdrehmomentventil strömenden Volumenstrom erfasst.

Die Messvorrichtung erkennt über die Volumenstrommessung und/oder Volumenmenge, ob die die Kraftschrauber antreibenden Kolben-Zylinder-Einheiten noch in Bewegung befindlich oder bereits zum Stillstand gekommen sind, was Rückschlüsse über den Zustand der jeweiligen Verschraubung zulässt, vor allen Dingen beim Nachziehen und/oder Setzen der Verschraubung und ob der gewünschte Drehwinkel erreicht ist.

Die zweite Messvorrichtung, die alternativ zur ersten oder zusätzlich zu dieser eingesetzt werden kann, ermittelt den Volumenstrom, der in einem Arbeitsvorgang über das den Druck begrenzende Druckdrehmomentventil abfließt. Entspricht der gemessene Volumenstrom im Wesentlichen dem Volumenstrom, der in einem Arbeitsvorgang durch die Antriebseinheit über die Ventileinheit gefördert wird, dann kann hieraus geschlussfolgert werden, dass sich die angeschlossenen Kraftschrauber nicht mehr bewegen und die Verschraubungen mit dem erforderlichen Drehmoment angezogen und nachgezogen sind.

Die Messvorrichtungen erlauben es somit in zuverlässiger Weise festzustellen, ob die herzustellenden Verschraubungen tatsächlich mit dem erforderlichen Drehmoment oder dem erforderlichen Drehwinkel angezogen sind. Solange noch ein Volumenstrom in einer der Hydraulikleitungen messbar ist, und/oder der Volumenstrom über das Druckdrehmomentventil einen festgelegten Wert nicht überschreitet, werden die Schraubvorgänge nicht als beendet angezeigt und/oder erkannt. Durch die Messung des Volumenstroms und/oder der Volumenmenge auf der Rückhubseite und/oder Lasthubseite jedes Kraftschraubers und/oder des Volumenstroms über das Druckdrehmomentventil wird somit in besonders zuverlässiger Weise verhindert, dass ein Schraubvorgang fälschlicherweise als beendet angezeigt wird, obwohl einzelne oder mehrere Schrauben noch nicht mit dem erforderlichen Drehmoment und/oder Drehwinkel angezogen sind.

Dies kann insbesondere dann der Fall sein, wenn bei der gleichzeitigen Herstellung mehrerer Verschraubungen eine oder mehrere der anzuziehenden Muttern oder Schrauben aufgrund einer erhöhten Reibung "hängen" und erst bei erhöhtem Arbeitsdruck, welcher sich einstellt, wenn die übrigen Schrauben angezogen werden, weitergedreht werden oder die Verschraubungen unterschiedlich weit vorgezogen oder beigeschraubt sind. Das erfindungsgemäße System gewährleistet in diesem Fall, dass auch diese nachlaufende Schraube beigezogen und ebenfalls mit dem erforderlichen Drehmoment und/oder Drehwinkel angezogen wird. Vorzugsweise erfolgt die Messung des Volumenstroms und/oder der Volumenmenge auf der Rückhubseite.

Die Anordnung der Messvorrichtungen an der Antriebseinheit erleichtert die Handhabung des Systems, da auf eine separate Vorrichtung verzichtet werden kann. Darüber hinaus besteht nach einer in besonders vorteilhaften Weiterbildung der Erfindung die Möglichkeit, diese zur Steuerung der Antriebseinheit zu verwenden. Die Messvorrichtungen signalisieren gemäß dieser Weiterbildung der Erfindung nicht nur das Ende des Schraubvorgangs, sondern beenden selbsttätig, nach einem vom Benutzer initiierten Beginn des Schraubvorgangs, den Arbeitsvorgang. Das Bedienpersonal muss dann nur noch die Kraftschrauber von der hergestellten Verschraubung entfernen und kann diese ggf. auf die neu herzustellenden Verschraubungen aufsetzen.

Das erfindungsgemäße System gewährleistet in besonderem Maße, dass die Verschraubungen gleichzeitig hergestellt werden und alle angeschlossenen Verschraubungen zuverlässig mit dem Drehmomentdruck und/oder Drehwinkel angezogen bzw. nachgezogen sind und/oder sich gesetzt haben. Dies ist insbesondere bei Großanlagen erforderlich, um einem Verkanten der zu verbindenden Bauteile vorzubeugen. Bei nicht gleichmäßigem Anziehen der in der Regel gegenüberliegend angeordneten Verschraubungen kann es anderenfalls zu einer Zerstörung der Bauteile oder zugeordneter Bauteile wie z. B. Dichtungen kommen.

Eine weitere Komfortsteigerung bei der Bedienung des Systems kann dadurch erreicht werden, wenn nach einer Weiterbildung der Erfindung die Messvorrichtungen direkt in die Antriebseinheit integriert ist. Das Bedienpersonal nutzt dann nur noch eine Geräteeinheit, nämlich die Antriebseinheit mit integrierter Pumpeneinheit, Ventileinheit und Messvorrichtungen, welche den Schraubvorgang in der oben dargestellten Weise überwacht und ggf. auch beendet. Ggf. besteht ferner die Möglichkeit, die Antriebseinheit noch mit einer Dokumentationseinheit auszustatten, welche zu den ausgeführten Schraubvorgängen automatisch Protokolle anfertigt, die in elektronischer Form abgespeichert oder auch ausgedruckt werden können. Hierdurch wird die Dokumentation der Arbeiten in ergänzender Weise vereinfacht.

Nach einer besonders vorteilhaften Ausgestaltung der Erfindung ist die erste Messvorrichtung derart ausgebildet, dass diese die Antriebseinheit abschaltet, wenn bei zwei aufeinanderfolgenden Arbeitsvorgängen an allen angeschlossenen Kraftschraubern kein Volumenstrom und/oder die festgelegte Volumenmenge mehr messbar ist oder wenn der erforderliche Drehwinkel an allen Schraubverbindungen erreicht ist. Diese Weiterbildung weist den Vorteil auf, dass der Schraubvorgang erst dann beendet wird, wenn sämtliche anzuziehenden Schrauben tatsächlich mit dem geforderten Drehmoment und/oder Drehwinkel angezogen sind. Durch die Vorgabe, dass eine Beendigung erst dann erfolgt, wenn bei z.B. zwei aufeinanderfolgenden Lasthüben mit vorgegebenen Drehmoment kein Durchfluss und/oder die festgelegte Volumenmenge messbar ist, wird gewährleistet, dass auch Bewegungen der Schraube durch Nachziehen oder Setzen berücksichtigt werden, so dass in besonderem Maße sichergestellt wird, dass die Schraubvorgänge in geforderter Weise abgeschlossen sind.

Gemäß einer weiteren Ausgestaltung der Erfindung ist die zweite Messvorrichtung derart ausgebildet, dass diese die Ventileinheit abschaltet, wenn der Volumenstrom durch das Druckdrehmomentventil in einem Arbeitsvorgang annähernd dem in einem Arbeitsvorgang über die Ventileinheit geförderten Volumenstrom entspricht. Entspricht also der Volumenstrom über das Druckdrehmomentventil im Wesentlichen dem von der Antriebseinheit zum Antrieb der Kraftschraube geförderten Volumenstrom und/oder ist die Menge des in die Kraftschrauber geförderten Volumens kleiner einer festgelegten Menge, dann kann hieraus geschlossen werden, dass die Verschraubungen in vorgegebener Weise hergestellt sind. Die zweite Messvorrichtung, die alleine oder ergänzend zur ersten verwendbar ist, schaltet dann die Antriebseinheit ab und signalisiert damit die Beendigung des Schraubvorgangs. Hierdurch kann mit besonders hoher Sicherheit gewährleistet werden, dass alle Verschraubungen einwandfrei hergestellt sind.

In einer weiteren die Verschraubung besonders sicher ausführenden Ausgestaltung ist die erste Messvorrichtung derart ausgebildet, dass diese die Ventileinheit schaltet, wenn nach dem Erreichen des gewünschten Drehmoments nach einem und/oder mehreren der zuvor beschriebenen Verfahren die geströmte Volumenmenge in einer und/oder beiden Hydraulikleitungen eines an der Antriebseinheit angeschlossenen Kraftschraubers nach ggf. mehreren Arbeitsvorgängen insgesamt einem gewünschten Drehwinkel entspricht.

Die Messvorrichtung signalisiert gemäß dieser Weiterbildung daraufhin dem Benutzer, den entsprechenden Kraftschrauber von der hergestellten Verschraubung zu entfernen und gemäß dem beschriebenen Verfahren die weiteren Verschraubungen herzustellen.

Eine weitere den Komfort der Bedienung des Systems steigernden Weiterbildung der Erfindung kann dadurch erreicht werden, dass die Hydraulikleitungen der einzelnen Kraftschrauber automatisch getrennt werden.

Ein Ausführungsbeispiel der Erfindung wird nachstehend mit Bezug auf die Zeichnungen erläutert. In den Zeichnungen zeigt:
- Fig. 1: eine schematische Darstellung einer Antriebseinheit mit vier daran angeordneten Kraftschraubern und
- Fig. 2: eine schematische Darstellung des Einsatzes der vier Kraftschrauber zur Herstellung einer Verschraubung an einem Flansch.

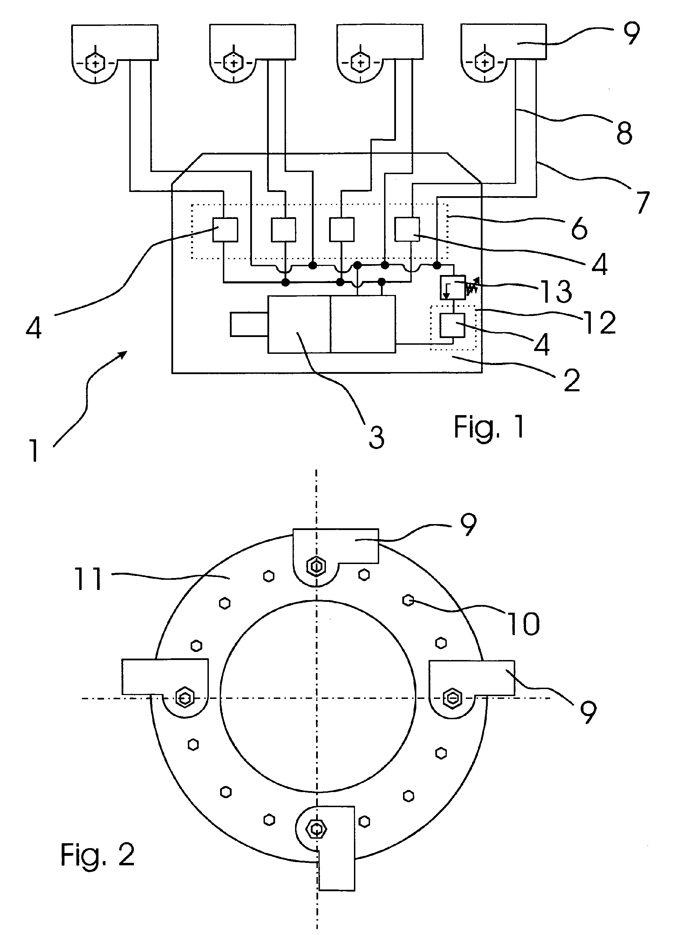

Fig. 1 zeigt in einer schematischen Darstellung ein System 1 zur Herstellung von Verschraubungen mit vier an eine Antriebseinheit 2 angeschlossenen Kraftschraubern 9. Die Kraftschrauber 9 sind dabei jeweils über zwei Hydraulikleitungen 7, 8 mit einer Ventileinheit 3 der Antriebseinheit verbunden. Die Hydraulikleitungen 7 sind dabei an der Lasthubseite und die Hydraulikleitungen 8 an der Rückhubseite der hier nicht dargestellten, die Kraftschrauber 9 antreibenden Kolben-Zylinder-Einheiten angeschlossen.

Eine in die Antriebseinheit 2 integrierte erste Messvorrichtung 6 weist eine jedem angeschlossenen Kraftschrauber 9 zugeordnete Volumen- und/oder Volumenstromerfassungseinheit 4 auf, welche das Volumen und/oder den Volumenstrom auf der Rückhubseite der einzelnen Kraftschrauber 9 misst. Die Anzahl des Volumens und/oder der Volumenstromerfassungseinheiten 4 der ersten Messvorrichtung 6 richtet sich dabei nach der Anzahl der an die Antriebseinheit 2 anschließbaren Kraftschrauber 9.

In dem in Fig. 1 dargestellten Beispiel können an die Antriebseinheit 2 vier Kraftschrauber 9 angeschlossen werden, welche bei Beginn eines Schraubvorgangs ein gleichzeitiges Anziehen der herzustellenden Verschraubung 10 bewirken.

Neben der ersten Messvorrichtung 6 weist das System 1 ferner eine zweite Messvorrichtung 12 auf, welche ebenfalls in die Antriebseinheit 2 integriert ist. Die zweite Messvorrichtung 12 erfasst den über ein den Drehmomentdruck festlegendes Druckdrehmomentventil 13 abfließenden Volumenstrom. Überschreitet dieser einen zuvor festgelegten Wert, der im Wesentlichen dem Fördervolumen der Antriebseinheit 2 in einem Arbeitsgang entspricht, dann signalisiert die zweite Messvorrichtung 12 die Beendigung des Schraubvorgangs. Die gleichzeitige Verwendung der ersten und zweiten Messvorrichtung 6, 12, die auch alternativ verwendbar sind, gewährleistet in besonderem Maße die Herstellung geforderter Verschraubungen 10.

In Fig. 2 ist in einer schematischen Darstellung die Herstellung von Verschraubungen 10 an einem Flansch 11 mittels vier Kraftschraubern 9 dargestellt. Die in die Antriebseinheit 2 integrierte Messvorrichtung 6 erfasst nach Beginn des Schraubvorgangs kontinuierlich den Volumenstrom auf der Rückhubseite der Kraftschrauber 9 und beendet die Schraubvorgänge, wenn kein Volumenstrom mehr an allen Messpunkten erfasst wird und/oder die Menge des in die Kraftschrauber geförderten Volumens kleiner einer festgelegten Menge ist.

Insbesondere wenn die Verschraubungen 10 räumlich weit voneinander entfernt sind, kann somit trotzdem gewährleistet werden, dass ein gleichmäßiges Anziehen der Verschraubungen 10 hergestellt wird. Sollte er zu einem Verklemmen einer oder mehrerer Verschraubungen 10 beim Anziehen kommen, die erst bei erhöhtem Druck gelöst werden, der sich einstellt, wenn die übrigen Verschraubungen 10 bereits beigezogen werden, dann stellt das System sicher, dass auch diese Verschraubungen mit dem erforderlichen Drehmoment angezogen werden. Ein Arbeitsvorgang ist erst beendet, wenn auch die entsprechenden Volumen- und/oder Volumenstromerfassungseinheiten 4 keinen Volumenstrom mehr erkennen und/oder die Menge des in die Kraftschrauber geförderten Volumens kleiner einer festgelegten Menge ist.

## Patentansprüche

1. System zum gleichzeitigen Anziehen von Verschraubungen in einem Arbeitsgang mit
- einer eine Ventileinheit (3) aufweisenden Antriebseinheit (2) für
- mindestens zwei, vorzugsweise vier hydraulische Kraftschrauber (9) mit jeweils einer Kolben-Zylinder-Einheit, die jeweils über eine auf einer Lasthubseite und eine auf einer Rückhubseite angeordnete Hydraulikleitung (7, 8) mit der Ventileinheit (3) verbunden sind, **dadurch gekennzeichnet, dass**
- an der Antriebseinheit (2)
- eine erste Messvorrichtung (6, 12) zur Erfassung des Volumens und/oder Volumenstroms auf der Rückhubseite und/oder Lasthubseite der mit der Ventileinheit (3) verbundenen Kraftschrauber (9) und/oder
- eine zweite Messvorrichtung (12) zur Ermittlung des Volumens und/oder Volumenstroms durch ein den Drehmomentdruck begrenzendes Druckdrehmomentventil (13),
angeordnet ist.

2. System nach Anspruch 1, **dadurch gekennzeichnet, dass** die erste und/oder zweite Messvorrichtung (6, 12) zur Steuerung der Ventileinheit (3) ausgebildet ist.

3. System nach Anspruch 1 oder 2, **dadurch gekennzeichnet, dass** die erste und/oder zweite Messvorrichtung (6, 12) in die Antriebseinheit (2) integriert ist.

4. System nach einem der vorhergehenden Ansprüche, **dadurch gekennzeichnet, dass** die erste Messvorrichtung (6) derart ausgebildet ist, dass diese die Ventileinheit (3) abschaltet, wenn bei zwei aufeinanderfolgenden Arbeitsvorgängen an allen angeschlossenen Kraftschraubern (9) kein Volumenstrom und/oder die festgelegte Volumenmenge mehr messbar ist oder wenn der erforderliche Drehwinkel an allen Schraubverbindungen erreicht ist.

5. System nach einem der vorhergehenden Ansprüche, **dadurch gekennzeichnet, dass** die zweite Messvorrichtung (12) derart ausgebildet ist, dass diese die Ventileinheit (3) abschaltet, wenn der Volumenstrom durch das Druckdrehmomentventil (13) in einem Arbeitsvorgang annähernd dem in einem Arbeitsvorgang über die Ventileinheit (3) geförderten Volumenstrom entspricht.

6. System nach einem der vorhergehenden Ansprüche, **dadurch gekennzeichnet, dass** jeder Kraftschrauber (9) durch eine separate Messvorrichtung (6) überwachbar ist.

7. System nach einem der vorhergehenden Ansprüche, **dadurch gekennzeichnet, dass** jedem Kraftschrauber (9) und/oder dem Druckdrehmomentventil (13) ein Volumen und/oder eine Volumenstromerfassungseinheit (4) zugeordnet ist.

8. System nach Anspruch 6 oder 7, **dadurch gekennzeichnet, dass** die Messvorrichtung(en) (6, 12) derart ausgebildet ist/sind, dass diese die Ventileinheit (3) mehrfach schaltet, sobald ein gewünschter Drehwinkel und/oder Drehmoment erreicht ist.

9. System nach Anspruch 8, **dadurch gekennzeichnet, dass** die Ventileinheit (3) derart ausgestaltet ist, dass die einzelnen Kraftschrauber (9) automatisch vom Volumenstrom getrennt werden können, sobald dieser die Verschraubung auf den gewünschten Drehwinkel und/oder Drehmoment gebracht hat.

## Claims

1. A system for simultaneous tightening of threaded joints in one processing step with
- a drive unit (2) having a valve unit (3) for
- at least two, preferably four, hydraulic power screwdrivers (9) each with one piston-cylinder unit, each of which are connected with the valve unit (3) via one hydraulic line (7, 8) arranged on a load-stroke side and one arranged on the return-stroke side, **characterized in that**,
- there are arranged on the drive unit (2)
- a first measurement device (6, 12) for capturing the volume and/or volume flow on the return-stroke side and/or load-stroke side of the power screw drivers (9) connected with the valve unit (3) and/or
- a second measurement device (12) for determining the volume and/or the volume flow through a pressure torque valve (13) limiting the torque pressure.

2. The system according to claim 1, **characterized in that** the first and/or second measurement device (6, 12) is designed to control the valve unit (3).

3. The system according to claim 1 or 2, **characterized in that** the first and/or second measurement device (6, 12) is integrated into the drive unit (2).

4. The system according to one of the preceding claims, **characterized in that** the first measurement device (6) is designed such that it switches off the valve unit (3) when a volume flow and/or the determined volume amount is no longer measurable in the case of two subsequent work processes on all connected power screwdrivers (9) or when the required angle of rotation is reached on all screw joints.

5. The system according to one of the preceding claims, **characterized in that** the second measurement device (12) is designed such that it switches off the valve unit (3) when the volume flow through the pressure torque valve (13) in one work process almost corresponds to the volume flow in one work process conveyed via the valve unit (3).

6. The system according to one of the preceding claims, **characterized in that** each power screwdriver (9) can be monitored by a separate measurement device (6).

7. The system according to one of the preceding claims, **characterized in that** a volume and/or a volume flow detection unit (4) is assigned to each power screwdriver (9) and/or the pressure torque valve (13).

8. The system according to claim 6 or 7, **characterized in that** the measurement device(s) (6, 12) is/are designed such that it switches the valve unit (3) multiple times as soon as a desired angle of rotation and/or torque is reached.

9. The system according to claim 8, **characterized in that** the valve unit (3) is designed such that the individual power screwdrivers (9) can be automatically separated from the volume flow as soon as it has brought the screw joint to the desired angle of rotation and/or torque.

## Revendications

1. Système pour serrer simultanément des boulonnages en une étape, avec
- une unité d'entraînement (2), présentant une unité de vanne (3), pour
- au moins deux, de préférence quatre, visseuses mécaniques (9) hydrauliques avec respectivement une unité piston-cylindre, qui sont raccordées à l'unité de vanne (3) par respectivement une conduite hydraulique (7, 8) disposée sur un côté course de charge et une conduite hydraulique (7, 8) disposée sur un côté course de retour,
**caractérisé en ce que**
- sur l'unité d'entraînement (2)
- un premier dispositif de mesure (6, 12) pour la détection du volume et/ou du flux volumique est disposé sur le côté course de retour et/ou sur le côté course de charge des visseuses mécaniques (9) raccordées à l'unité de vanne (3) et/ou
- un deuxième dispositif de mesure (12) est disposé pour la détection du volume et/ou du flux volumique à travers une vanne de couple de pression (13) limitant la pression de couple.

2. Système selon la revendication 1, **caractérisé en ce que** le premier et/ou le deuxième dispositif de mesure (6, 12) est constitué pour la commande de l'unité de vanne (3).

3. Système selon la revendication 1 ou 2, **caractérisé en ce que** le premier et/ou le deuxième dispositif de mesure (6, 12) est intégré dans l'unité d'entraînement (2).

4. Système selon une des revendications précédentes, **caractérisé en ce que** le premier dispositif de mesure (6) est constitué de sorte qu'il met l'unité de vanne (3) hors circuit quand, lors de deux étapes consécutives, aucun flux volumique et/ou la quantité volumique stipulée n'est plus mesurable sur aucune visseuse mécanique (9) raccordée, ou quand l'angle de rotation nécessaire est atteint sur tous les boulonnages.

5. Système selon une des revendications précédentes, **caractérisé en ce que** le deuxième dispositif de mesure (12) est constitué de sorte qu'il met l'unité de vanne (3) hors circuit quand le flux volumique à travers la vanne de couple de pression (13) dans une étape correspond à peu près au flux volumique transporté dans une étape par le biais de l'unité de vanne (3).

6. Système selon une des revendications précédentes, **caractérisé en ce que** chaque visseuse mécanique (9) peut être surveillée par un dispositif de mesure (6) séparé.

7. Système selon une des revendications précédentes, **caractérisé en ce qu'**un volume et/ou une unité de détection de flux volumique (4) est affecté(e) à chaque visseuse mécanique (9) et/ou à la vanne de couple de pression (13).

8. Système selon la revendication 6 ou 7, **caractérisé en ce que** le/les dispositif(s) de mesure (6, 12) est/sont constitué(s) de sorte qu'il(s) met/mettent l'unité de vanne (3) plusieurs fois en circuit dès qu'un angle de rotation souhaité et/ou un couple souhaité est atteint.

9. Système selon la revendication 8, **caractérisé en ce que** l'unité de vanne (3) est constituée de sorte que les visseuses mécaniques (9) individuelles peuvent être séparées automatiquement du flux volumique dès que ce dernier a amené le boulonnage à l'angle de rotation souhaité et/ou au couple souhaité.
